# EUROPÄISCHE PATENTSCHRIFT

(11) **EP 0 835 198 B1**
(45) Veröffentlichungstag und Bekanntmachung des Hinweises auf die Patenterteilung: **18.08.1999**
(21) Anmeldenummer: 96922851.9
(22) Anmeldetag: 19.06.1996
(51) Int. Cl.: B60S 1/16, B60S 1/08, F16H 57/02

(54) **GEHÄUSE FÜR EIN GETRIEBE**
MECHANISM HOUSING
CARTER D'UN MECANISME

(30) Priorität: 29.06.1995 DE 19523589; 06.07.1995 DE 19524628; 27.12.1995 DE 19548828
(43) Veröffentlichungstag der Anmeldung: 15.04.1998
(73) Patentinhaber: ITT Automotive Europe GmbH, 60488 Frankfurt am Main (DE)
(72) Erfinder: WALTHER, Bernd, D-74321 Bietigheim-Bissingen (DE); HEUBERGER, Christof, 71665 Vaihingen (DE); CSERMAK, Martin, D-74321 Bietigheim-Bissingen (DE); RIENHARDT, Hans-Peter, D-74172 Neckarsulm (DE); RIEGER, Sonja, D-74232 Abstatt (DE)
(74) Vertreter: Dreiss, Fuhlendorf, Steimle & Becker
(86) Internationale Anmeldenummer: EP9602661
(87) Internationale Veröffentlichungsnummer: WO9701466

(56) Entgegenhaltungen:
- EP-A- 0 403 284
- EP-A- 0 672 812
- DE-A- 2 935 498
- DE-A- 3 406 686
- DE-U- 9 315 382
- FR-A- 2 603 358
- US-A- 3 838 203
- US-A- 4 834 603
- PATENT ABSTRACTS OF JAPAN vol. 95, no. 001 & JP 07 012114 A (MORIDEN), 17.Januar 1995,

## Beschreibung

Die Erfindung betrifft ein Gehäuse für ein Getriebe bestehend aus einem Grundkörper (20) mit mindestens einer Vertiefung (28) zur Aufnahme von Getriebeelementen, wobei die Vertiefung durch einen metallischen Deckel (17) verschlossen ist, und eine Führungshülse (40) am Grundkörper ausgebildet ist, die sich nach außen senkrecht zum Boden (27) des Grundkörpers erstreckt.

Ein derartiges Gehäuse ist aus der DE-A-3406686 bekannt, welches aus Druckguß oder Kunststoff gefertigt ist. Die Art der Versteifungen wird nicht erwähnt, wenn auch Versteifungen möglicherweise vorhanden sind.

Um das Gehäuse möglichst leicht und steif auszubilden, sind nach der Erfindung folgende Merkmale vorgesehen:
- der Grundkörper besteht aus einem glasfaserverstärkten Kunststoff,
- im Boden der Vertiefung ist eine Zapfenaufnahme vorgesehen, die sich senkrecht nach außen aus dem Boden erhebt,
- Versteifungsstreben verlaufen zwischen der Zapfenaufnahme und der Führungshülse.

Durch die Erfindung lassen sich folgende Vorteile erreichen: Es lassen sich die auftretenden Kräfte abstützen.

Durch den Boden dieses Gehäuses wird eine Abriebswelle nach außen geführt. Da auf diese Welle erhebliche Kippmomente ausgeübt werden, insbesondere dann, wenn sie dem Antrieb eines Wischarmes dient, ist eine entsprechend lange Führung notwendig. Um diese Führung im Gehäuse sicher zu verankern, dienen die Merkmale, daß im Boden der Vertiefung eine Zapfenaufnahme angeordnet ist, die sich senkrecht nach außen aus dem Boden erhebt, und daß die Führungshülse (bzw Lagerhülse) am Grundkörper ausgebildet ist, die sich ebenfalls nach außen senkrecht zum Boden des Grundkörpers erstreckt und daß zwischen der Zapfenaufnahme und der Führungshülse Versteifungsstreben verlaufen.

Eine besonders stabile und trotzdem leichtbauende Verankerung der Führungshülse erhält man, wenn die Führungshülse in einem Dom angeordnet ist, wobei zwischen den Innenwänden des Doms und der Außenwände der Führungshülse senkrecht verlaufende Versteifungsstreben angeordnet sind.

Im folgenden wird die Ausführung einer Motorgetriebeeinheit für eine Wischanlage eines Kraftfahrzeuges beschrieben. Wie aus der Beschreibung deutlich wird, lassen sich die wesentlichen Elemente dieser Anlage auch für Motorgetriebeeinheiten einsetzen, die anderen Anwendungszwecken dienen.

Die Beschreibung erfolgt anhand von 10 Figuren, die folgendes zeigen:
- Figur 1: zeigt eine Motorgetriebeeinheit ohne Getriebedeckel , wobei die Darstellung zum Teil in Draufsicht zum Teil im Schnitt erfolgt.
- Figur 2: zeigt einen Schnitt entlang der Linie II-II der Figur 1.
- Figur 3: zeigt in Draufsicht das Getriebegehäuse ohne Deckel mit einer auf den Boden des Gehäuses liegenden Kontaktscheibe.
- Figur 4: zeigt einen Schnitt entlang der Linie IV-IV der Figur 3.
- Figur 5: zeigt eine Sicht von außen gegen den Boden des Getriebegehäuses, zum Teil in Draufsicht, zum Teil geschnitten, mit einer eingelegten Elektronikeinheit.
- Figur 6: zeigt eine Draufsicht auf die Bürstentrageplatte des Elektromotors.
- Figur 7: zeigt einen Schnitt durch das Gehäuse entlang der Linie VII-VII der Figur 1,
- Figur 8: zeigt ein Detail auf Figur 2,
- Figuren 9 a, b: zeigen die Kontaktplatte, die in das Gehäuse eingelegt wird,
- Figur 10: zeigt eine Befestigungsmöglichkeit für die Kontaktplatte im Gehäuse,
- Figur 11: zeigt Einzelheiten der Wasserdurchführung durch die Abtriebswelle.

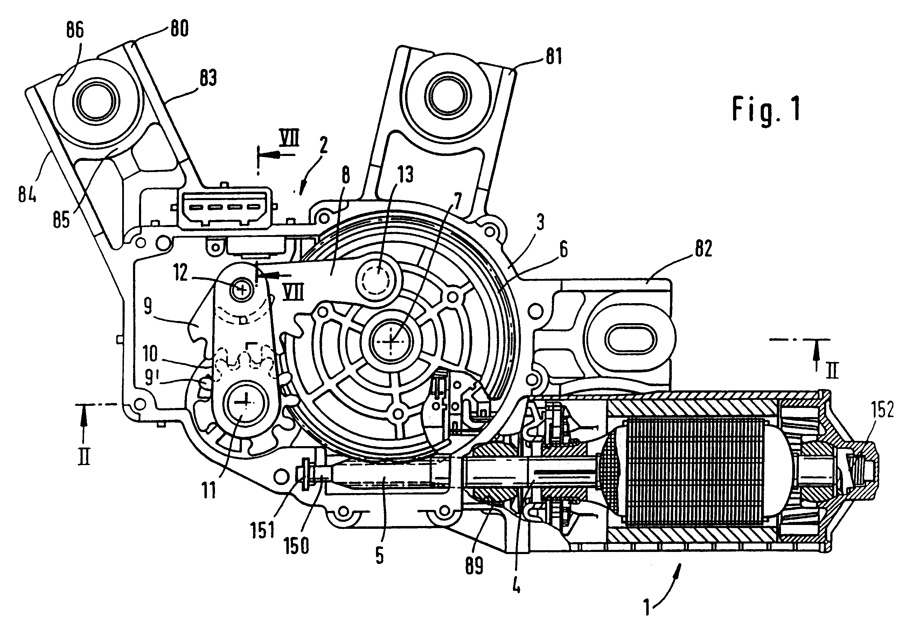

Zunächst wird auf die Figur 1 Bezug genommen.

Die Einheit besteht aus einem Elektromotor 1 sowie einem Getriebe 2. Der Elektromotor 1 ist seitlich am Getriebegehäuse 3 befestigt. Bei dem Getriebe handelt es sich um ein sogenanntes Pendelgetriebe.

Dieses besteht aus den folgenden Elementen. Die Motorwelle 4 ist verlängert und trägt an ihrem verlängerten Ende eine Schnecke 5. Diese kämmt in einem Schneckenrad 6. Exzentrisch zur Achse 7 des Schneckenrades 6 ist ein erster Hebel 8 mit einem Teilritzel 9 mit dem Schneckenrad 6 im Drehpunkt 13 schwenkbar verbunden. Das Teilritzel 9 greift in ein weiteres Teilritzel 9' an der Abtriebswelle 11 ein. Ein Drehpunkt 12 am ersten Hebel 8 ist über einen zweiten Hebel 10 derart an die Abtriebswelle 11 angelenkt, daß der Drehpunkt 12 sich stets auf einen Teilradius um die Achse der Abtriebswelle 11 bewegt.

Wird das Schneckenrad 6 durch den Motor unter Beibehaltung seiner Drehrichtung angetrieben, führt der erste Hebel 8 aufgrund seiner doppelten Anlenkung in den Drehpunkten 12, 13 eine Zwangsbewegung aus, die dazu führt, daß die Abtriebswelle 11 hin- und hergehend bewegt wird. Durch eine entsprechende Wahl der Geometrie der Teilritzel 9, 10 sowie der Anlenkpunkte 12, 13, läßt sich nahezu jeder beliebige Schwenkwinkel der Abtriebswelle 11 einstellen.

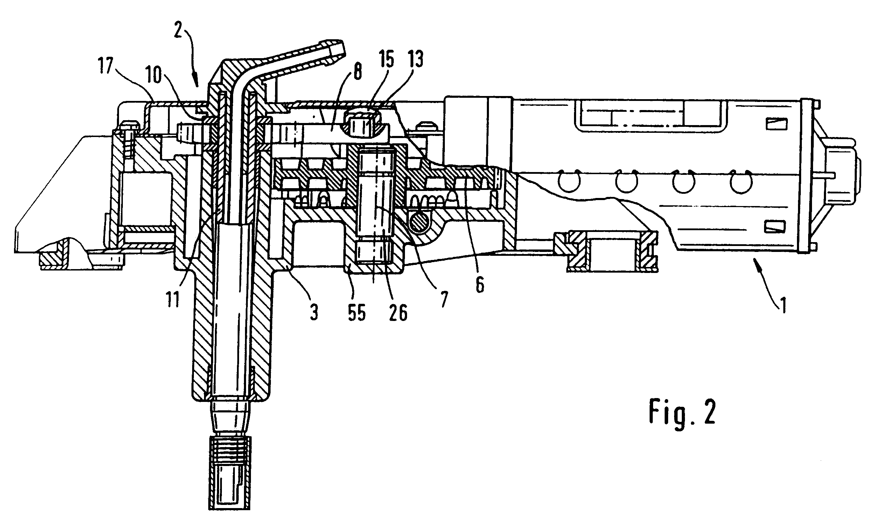

Wie insbesondere der Figur 2 entnommen werden kann, ragt die Achse des Drehpunktes 13 etwas über den ersten Hebel 8 hinaus. Auf dieses Ende ist eine Kappe 15 aufgesetzt, die an der Unterseite des Deckels 17 des Getriebegehäuses 3 entlanggleitet

Zur Aufnahme dieses Getriebes ist ein Getriebegehäuse 3 vorgesehen, daß aus zwei Teilen besteht. Der erste Teil besteht aus einem Grundkörper 20 aus Kunststoff, der mehrere Ausnehmungen aufweist. Die größte Aufnehmung dient der Aufnahme des Schneckenrades 6, so daß der Grundkörper 20 im wesentlichen topf- bzw. wannenförmig ist. Die offene Seite des Grundkörpers 20 wird durch den schon erwähnten Deckel 17 aus Metall verschlossen, der den zweiten Teil des Getriebegehäuses bildet.

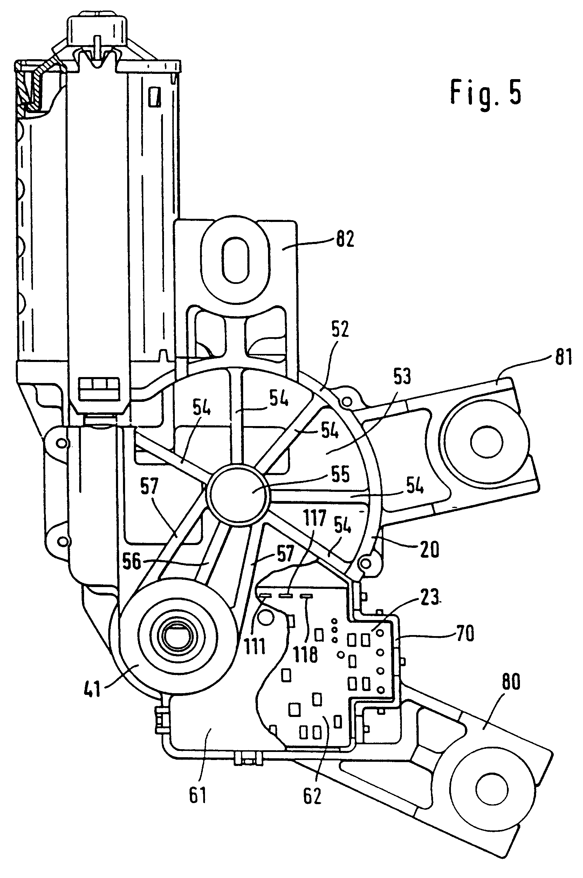

Der Grundkörper 20 nimmt nun zusätzlich zu den Getriebeelementen weiter Elemente auf, die der Steuerung des Motors dienen. Diese sind insbesondere eine Elektronikeinheit 23 (siehe Figur 5) und ein Kontaktblech 22 mit Kontaktfahnen, die an entsprechenden Schaltbahnen entlanggleiten, die am Schneckenrad 6 befestigt sind.

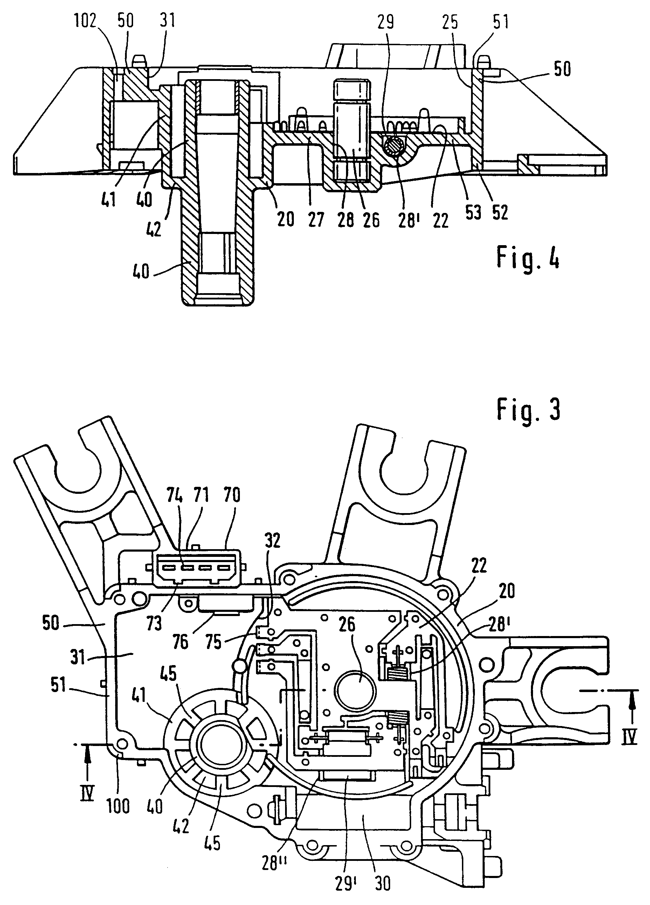

Damit diese Elemente aufgenommen werden können, sind weitere Kammern bzw. Ausnehmungen im Grundkörper 20 vorgesehen, die im folgenden anhand der Figuen 3, 4 und 5 näher beschrieben werden sollen. Ein erster Bereich dient der Aufnahme des Schneckenrades 6 und soll daher im folgenden Zahnradkammer 25 genannt werden. Sie ist kreisförmig und besitzt eine Tiefe, die im wesentlichen der Höhe des Zahnrades entspricht. Wie der Figur 3 zu entnehmen ist, wird auf den Boden der Zahnradkammer ein Kontaktblech 22 flächig eingelegt. Im Zentrum der Kammer befindet sich ein Zapfen 26, der die Achse des Schneckenrades 6 bildet. Dieser Zapfen wird in einer entsprechenden Vertiefung 28 im Boden 27 der Zahnradkammer gehalten.

Der Boden weist weitere Vertiefungen 28', 28'' auf, in denen eine Entstördrossel 29 bzw. ein Kondensator 29' eingeführt werden, die auf der Unterseite des Kontaktbleches 22 angeordnet sind. An die Zahnradkammer 25 schließt sich eine Rille 30 an, in der die Schnecke 5 an der verlängerten Motorwelle 4 angeordnet wird. Zur Durchführung der Welle, schließt sich in axialer Richtung an die Rinne 30 ein Durchbruch an, der in den Flansch für den Elektromotor 1 endet. Die Rinne 30 ist zur Zahnradkammer 25 hin offen, damit die Schnecke 5 und das Schneckenrad 6 in Kontakt treten können. An einer weiteren Seite der Zahnradkammer 25, etwa um 90 Grad zur Rinne 30 versetzt, und vom Elektromotorenflansch abgewandt, befindet sich ein Schwenkbereich 31, der wie deutlich der Figur 1 zu entnehmen ist, dazu dient, Schwenkmöglichkeiten für den ersten und zweiten Hebelarm 8, 10 zu schaffen.

Dieser Bereich 31 ist nach außen hin in etwa quadratisch begrenzt, der Boden ist flach, seine Tiefe ist wesentlich geringer als die der Zahnradkammer 25, so daß zwischen der Zahnradkammer 25 und dem Schwenkbereich 31 eine Stufe 32 vorliegt.

Zur Aufnahme einer Lagerhülse 40 ist im Anschluß an den Schwenkbereich 31 sowie der Zahnradkammer 25 ein topfförmiger Aufnahmedom 41 vorgesehen. Die Kante des Aufnahmedoms 41 beginnt etwa auf Höhe des Bodens des Schwenkbereichs 31. Der Boden 42 des Aufnahmedoms 41 liegt noch deutlich unterhalb des Bodens der Zahnradkammer 25. Weil die äußere Kontur des Doms 41 zum Teil in die Zahnradkammer 25 hineinragt, ist die Wand des Doms in diesem Bereich weggeschnitten. Im Zentrum des Doms befindet sich die Lagerhülse 40, die auf Höhen des Bodens des Schwenkbereichs 31 beginnt durch den Boden 42 des Domes 41 hindurchragt und sich darüberhinaus erstreckt. Zwischen der Innenwand des Domes und der Außenwand der Lagerhülse 40 erstrecken sich Versteifungsstreben 45 über die gesamte Höhe des Domes. Zum Teil sind die Streben weggeschnitten, nämlich in dem Bereich, der in die Zahnradkammer 25 hineinreicht.

Die genannten Bereiche: Zahnradkammer 25, Rinne 30, Schwenkbereich 31 sowie der Dom 41 sind von einem Rand 50 umfaßt, dessen obere Kante auf gleicher Höhe verläuft und als Auflagefläche 51 für den Metalldeckel 17 und einer gegebenenfalls zwischen Rand und Deckel eingelegten Dichtung dient.

Wie der Figur 4 und 5 zu entnehmen ist, ist der Rand 50 zum Teil bis unterhalb des Bodens der einzelnen Bereiche geführt worden. In Figur 5 sieht man, daß der untere Randbereich 52 die Unterseite des Bodens 53 der Zahnradkammer 25 mit ca. 180 Grad umschließt. Von diesem über die Unterseite des Bodens hinaus verlängerten unteren Randbereich 52 verlaufen vier Rippen 54 zu einen zentralen Sockel 55, der ebenfalls aus der Unterseite des Bodens 53 hinausragt und wie in Figur 2 zu erkennen ist der Aufnahme des Zapfens 26 dient.

Man erkennt, daß der Sockel 55 in etwa auf gleicher Höhe endet wie der Boden 42 des Domes 41. Zwischen dem Sockel 55 und dem Dom 41 verlaufen drei Versteifungsrippen: die zentrale Rippe 56 verläuft vom Zentrum des Sockels 55 zur Achse des Domes 41, zwei Seitenrippen 57 verläufen jeweils tangential in den Sockel 55 bzw. in den Dom 41 hinein.

Die Anordnung der Rippen wurde deshalb gewählt, weil es notwendig ist, daß der Zapfen 26 also die Drehachse des Schneckenrades 6 sowie die Achse der Abtriebswelle 11 möglichst exakt zueinander ausgerichtet bleiben, um Geräusche beim Betrieb des Motors zu vermeiden. Um die dazu notwendige Steifigkeit zu erreichen, wurde der Sockel 55 nicht unmittelbar an die Lagerhülse 40 angebunden, sondern unter Zwischenschaltung des Domes 41 mit einem gegenüber der Lagerhülse 40 erweiterten Durchmesser. Damit können mögliche Verwindungen durch die Rippen 56, 57 besser aufgenommen werden. Die Lagerhülse 40 selbst ist über die Versteifungsrippen 45 fest im Dom 41 gehalten.

Auch der Rand 50 im Bereich des Schwenkbereichs 31 ist nach unten durchgezogen, so daß sich auf der vom Schwenkbereich 31 abgewandten Seite eine Aufnahmekammer 60 bildet, die der Aufnahme einer Steuerungselektronik 23 dient. Dies ist besonders gut in Figur 5 zu erkennen, in der ein Deckel 61, der diese Kammer verschließt, teilweise weggeschnitten ist, so daß eine Platine 62 zu erkennen ist, auf der elektronische Schaltelemente aufgebracht sind. Die Aufnahmekammer 60 wird begrenzt einerseits durch den nach unten durchgezogenen Rand, sowie durch eine der Rippen 54 und einer Seitenrippe 57.

An die Seitenwand des Schwenkbereichs 31 bzw. der Aufnahmekammer 60, die tangential in die Wand der Zahnradkammer 25 einläuft, ist ein Steckergehäuse 70 angeformt. Bei dem Steckergehäuse handelt es sich um einen rechteckförmigen Kasten 71, der nach oben und unten hin offen ist. Der Kasten 71 wird durch eine Trennwand 72, die zu den beiden offenen Seiten hin parallel verläuft, in zwei Bereiche unterteilt. Der eine Bereich ist zur oberen Seite des Gehäuses hin offen und dient der Führung eines Steckers, wozu die Innenseite des Kastens mit entsprechenden Führungsnuten 73 versehen ist. Der andere Bereich des Kastens, der zur unteren Seite des Gehäuses 3 hin offen ist, ist zusätzlich zur Aufnahmekammer 60 hin geöffnet, so daß die Platine 62 in diesem Bereich des Kastens hineinragen kann. An die Platine sind vier Stifte angelötet, die durch Durchbrüche 74 in der Trennwand hindurch in den ersten Bereich des Steckergehäuses 70 hineinragen, und dort mit den entsprechenden Kontakten des Gegensteckers in Verbindung gebracht werden können.

Im Bereich des Bodens der Zahnradkammer 25 sind ebenfalls drei Durchbrüche 75 vorgesehen, die in den Aufnahmebereich 60 hineinführen. Durch diese Durchbrüche 75 hindurch ragen Kontaktlaschen 111, 117, 118 des Kontaktblechs 22.

Ein weitere Durchbruch 76 führt vom Aufnahmebereich 60 durch den Boden des Schwenkbereichs 31 in den Schwenkbereich hinein. Seine Bedeutung soll weiter unten in Zusammenhang mit der Erläuterung des Kontaktblechs 22 näher beschrieben werden.

Wie in den Figuren 1-4 zu erkennen ist, sind an der Außenseite des Gehäuses drei Befestigungselemente 80, 81 und 82 angeordnet. Im Prinzip können diese Befestigungselemente an jeder Stelle des Gehäuses vorgesehen werden, je nachdem wie dies die Einbausituation im Fahrzeug es erfordert. Die Befestigungselemente 80, 81 und 82 bestehen jeweils aus einem Sockel mit zwei parallel verlaufenden Seitenwanden 83, 84, die die Form eines rechtwinkligen Dreiecks haben. Eine Kathete des Dreiecks besitzt die Länge, die der Höhe des Gehäuses 3 entspricht und schließt an das Gehäuse 3 an. Damit erstreckt sich die andere Kathete senkrecht von der Gehäusewand ab. Die Seitenwände 83, 84 schließen zwischen sich eine Fläche 85 ein, die am äußeren Ende ein Befestigungsauge 86 aufweist. Der andere Teil der Fläche kann, soweit es die Steifigkeit es erlaubt, durchbrochen sein. Die Befestigungselemente 80, 81, 82 können jeweils so angeordnet sein, daß das Auge 86 auf Höhe des Gehäusedeckels 17, auf Höhe der Unterseite des Gehäuses 3 oder mittig verläuft.

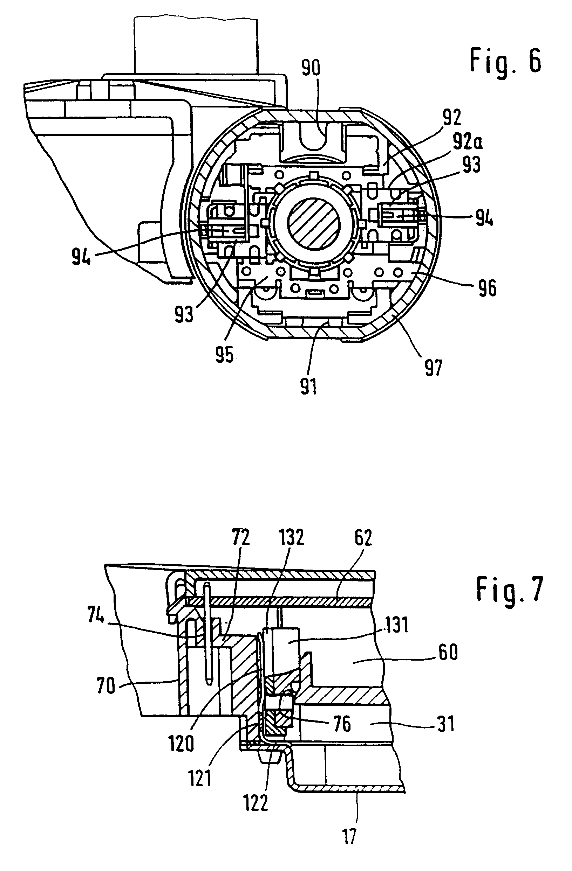

Im folgenden wird auf Figur 6 Bezug genommen. Der Bereich, in der der Elektromotor angeflanscht wird, weist eine Vertiefung 89 zur Aufnahme eines Lagers für die Motorwelle 4 auf. Außerdem sind oberhalb und unterhalb des Flanschbereichs Vertiefungen 90, 91 vorgesehen, in denen Befestigungshaken eingreifen, mit denen das Motorgehäuse 92 am Gehäuse befestigt wird. Auf die Flanschfläche kann entweder eine Bürstentrageplatte 92a aus Kunststoff, die mit entsprechenden Führungskanälen 93 für die Bürsten 94 des Elektromotors versehen sind, aufgesetzt werden oder schon von vornherein einstückig mit dem Gehäuse 3 ausgeführt werden. Zur Stromversorgung der Bürsten 94 bzw. zum Halten der Bürsten 94 in den entsprechenden Führungskanälen 93 in der Bürstentrageplatte 92 ist ein entsprechend gefaltetes Halteblech 95 vorgesehen, das mit dem Kontaktblech 22 am Boden des Gehäuses 3 verbunden werden kann. Dazu führt ein Durchbruch durch die Flanschfläche zur Zahnradkammer 25 hin. Am Halteblech 95 sind Zungen 96 vorgesehen, die durch diesen Durchbruch hindurchgreifen und mit dem Kontaktblech verlötet werden können. Außerdem besitzt das Halteblech eine Zunge 96, die an dem metallischen Gehäusemantel 97 des Elektromotors angelegt werden kann.

Die bisher genannten Elemente, die das Gehäuse bilden, werden aus einem Stück aus Kunststoff geformt und durch Spritzgießen hergestellt. Um die notwendige Steifigkeit zu erreichen enthält der Kunststoff Mineralfasern zwischen 2 mm und 10 mm Länge Er ernthält außerdem Zusätze, die den Kunststoff gegen Witterungseinflüße (Ozon) resistent machen und ihm, damit die Abtriebswelle unmittelbar in der Führungshülse gelagert werden kann, Gleiteigenschaften verleihen.

Bei der Auslegung des Grundkörpers 20 muß darauf geachtet werden, daß in möglichst allen Bereichen gleiche Wandstärken vorliegen.

Dies hat zunächst zur Folge, daß die Bereiche im Boden der Zahnradkammer 25, die die Drossel und den Kondensator aufnehmen, als entsprechende Ausbeulungen auf der Unterseite des Bodens 53 hervortreten.

Weiterhin ist die Lagerhülse 40, soweit sie aus dem Dom 41 heraus nach außen hervorragt, verdickt. Dies entspricht einer aufgestülpten Verblendungshülse, die bei den bisherigen Gehäusen, die nicht aus Kunststoff hergestellt sind, über die außen am Fahrzeug sichtbare Lagerhülse gestülpt wird. Dadurch, daß das ganze Gehäuse aus Kunststoff hergestellt wird, kann auf eine gesonderte Verblendung verzichtet werden. Die setzt allerdings im allgemeinen voraus, daß, wie schon erläutert, der Kunststoff aus witterungsbeständigen Material besteht.

Wie schon erläutert, ist der obere Rand des Grundkörpers 20 plan ausgebildet, damit dort der Deckel 17 aufgelegt werden kann. Da, wie weiter unten schon erläutert worden ist, der Deckel 17 auch als axiale Abstützung für das Getriebe dient (Kappe 15), ist eine erhöhte Anforderung an die Planheit der oberen Kante des Randes zu stellen.

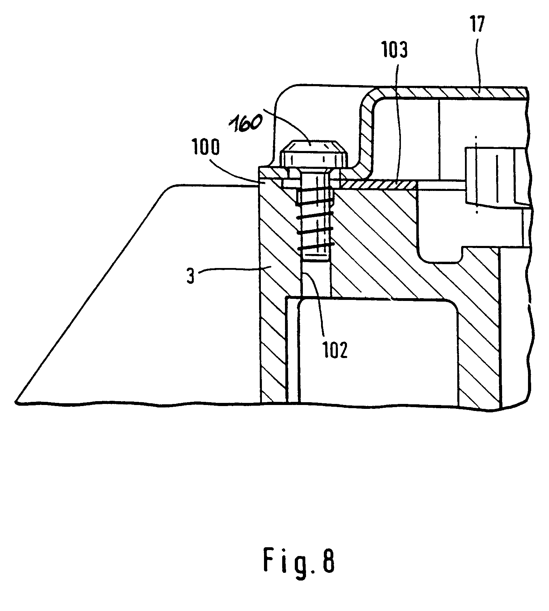

Um dies zu erreichen, muß die Spritzgußform so lange nachgearbeitet werden, bis unter Berücksichtigung von leichten Verwindungen, die beim Abkühlen des Gehäuses nach Herausnahme aus der Form entstehen, eine plane Kantenoberfläche entsteht. Eine derartige Nachbereitung ist äußerst schwierig. Deswegen wird der folgende Weg vorgeschlagen (siehe Figur 8).

Das Gehäuse 3 wird an mehreren Stellen mit Schrauben 160, deren zugeordneten Schraublöcher 102 in der Kante des Gehäuses angeordnet sind, verbunden. Neben den Schraublöchern 102 befinden sich auf der Kante Erhebungen 100, die das Schraubenloch über einen Teilkreis zur Seitenfläche des Gehäuses 3 hin umschließen. Die Höhe der Erhebung ist ein wenig geringer als die Höhe der verwendeten Dichtung 103 zwischen dem Gehäuse 3 und Gehäusedeckel 17.

Die einzelnen Erhebungen 100 können leicht auf gleiche Höhe gebracht werden, indem nach einen ersten Spritzguß und nach Abkühlen des Gehäuses die einzelnen Erhebungen 100 ausgemessen werden und die Gußform entsprechend nachgearbeitet wird, so daß bei den anschließend gefertigten Gehäusen die Erhebungen alle in gleicher Höhe sind. Da die Messung an definierten Punkten, nämlich an den Erhebungen 100 erfolgen, ist die Nachbearbeitung der Form leichter durchzuführen, da sie nur neu an den entsprechenden Stellen der Form erfolgen muß. Dies ist einfacher als wenn versucht werden würde, die gesamte Kantenoberfläche plan zu bekommen.

Die Dichtung 103 selbst ist nachgiebig, so daß, wenn der Deckel mit dem Gehäuse verschraubt wird, die Dichtung 103 soweit runtergedrückt ist, bis der Deckel 17 auf den Erhebungen 100 aufliegt.

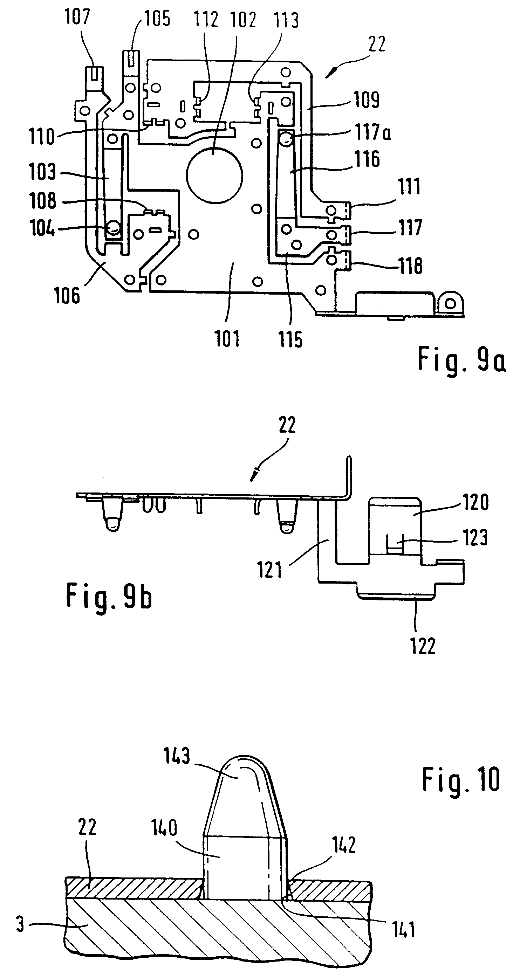

Im folgenden wird das Kontaktblech 22 beschrieben, daß in den Figuren 9a bzw. 9b gezeigt ist. Das Kontaktblech 22 wird aus einem Blech ausgestanzt, wobei zwischen den einzelnen Leiterbahnen noch Haltestege verbleiben, die nach dem Einsetzen des Kontaktbleches 22 in das Gehäuse 3 durchtrennt werden. Die Hauptleiterbahn 101 weist einen zentralen Durchbruch 102 auf, durch den der Zapfen 26 für das Schneckenrad 6 hin durchragt, sobald das Kontaktblech 22 auf den Boden der Zahnradkammer 25 aufliegt. Zu der Hauptbahn gehört eine Kontaktfeder 103, die aus der Ebene des Kontakbleches herausgebogen wird und die an ihrem Ende ein erhabener Kontakt 104 besitzt, der mit einer entsprechenden Leiterbahn auf der Unterseite des Schneckenrades zusammenwirkt. Weiterhin weist sie eine Kontaktfahne 105 auf, die sich im Außenbereich des Kontaktbleches 22 befindet.

Eine weitere Leiterbahn 106 verläuft in etwa parallel zur Kontaktfeder 103 und trägt an ihrem einen Ende eine zweite Kontaktfahne 107 sowie an ihrem anderen Ende ein Anschlußstück 108 für die Drossel 28. Eine dritte Leiterbahn 109, die L-förmig an der Außenseite des Kontaktbleches verläuft, weist an ihrem einen Ende eine Aufnahme 110 für das andere Ende der Drossel 28 auf und endet am anderen Ende in einen ersten Kontaktstift 111.

Diese dritte Leiterbahn 109 besitzt einen weiteren Anschluß 112 für den Kondensator 29, dessen anderes Ende an einen Anschluß 113 an der Hauptleiterbahn 101 anschließt. Eine vierte Leiterbahn 115, ist mit einer Kontaktfeder 116 versehen, die ebenso wie die erste Kontaktfeder 103 an ihrem aufgebogenen Ende mit einem Kontakt 117a versehen ist, die in einer weiteren Leiterbahn auf der Unterseite des Schneckenrades 6 zusammenwirkt. Das andere Ende dieser Leiterbahn 116 endet ebenfalls in einem zweiten Kontaktstift 117b, der neben den ersten Kontakstift 111 angeordnet ist. Ein dritter Kontaktstift 118 befindet sich an der Hauptleiterbahn 101. Die drei Kontaktstifte 111, 117, 118 sind nebeneinander angeordnet.

Die Hauptleiterbahn 101 ist einstückig mit einen Kühlblech 120 verbunden. Dieses erstreckt sich senkrecht zur Hauptleiterbahn 101 und ist mit dieser über ein L-förmige aufgebogenes Verbindungsstück 121 verbunden. Das obere Ende des Kühlblechs 120 ist umgebogen und bildet eine Anlagefläche 122 für den Deckel 17 des Gehäuses. In der Fläche des Kühlblechs 120 ist eine Lasche 123 ausgestanzt und ausgebogen.

Wenn das Kontaktblech 22 auf den Boden der Zahnradkammer aufgesetzt wird, so befinden sich die beiden Kontaktfahnen 105, 107 unmittelbar vor dem Durchbruch im Flansch für den Elektromotor. Das Bürstenhalteblech 95 weist zwei abgebogene Zungen auf, die durch diesen Durchbruch hindurchreichen, und die Kontaktfahnen 105 bzw. 107 kontaktieren. Die Kontaktstifte 111, 117, 118 ragen durch den Durchbruch 75 im Boden der Zahnradkammer 25 hindurch und gelangen in den Bereich der Elektronikaufnahme 60. Die entsprechende Stifte erkennt man daher auch in der Figur 5.

Das Kühlblech 120 ragt durch den Durchbruch 76 im Boden des Schwenkbereichs 31 hindurch, so daß das untere Ende die zu kühlende Einheiten der Elektronikeinheit berühren kann.

Das obere, abgebogene Ende befindet sich dann auf Höhe der Abschlußkante des Gehäuses, so daß die abgebogene Lasche 122 den Deckel 17 berührt.

Wie schon erläutert, weist die Platine 62 der Elektronikeinheit mehrere Kontaktstifte auf, die in das Steckergehäuse 70 hineinragen. Dies ist im Schnitt noch einmal in Figur 7 dargestellt. Diese Figur zeigt einen Schnitt durch das Gehäuse im Bereich des Steckergehäuses 70 und der Elektronikaufnahme 60 bzw. des Schwenkbereichs.

In der Elektronikaufnahme 60 liegt die Platine 62, an der unter anderem ein Leistungstransistor 131 angelötet ist. Mit dem Leistungstransistor 131 ist eine Kühlschelle 132 verbunden. Transistor 131 und Kühlschelle 132 ragen durch den Durchbruch 76 im Boden des Schwenkbereichs 31 hindurch, wobei die Kühlschelle 132 flächig am Kühlblech 120 anliegt. Die ausgebogene Lasche 121 sorgt, da sie sich an der Wand des Gehäuses abstützt, daß die Kühllasche 120 großflächig an der Kühlschelle 132 anliegt. Außerdem ist zu erkennen, daß das umgebogene Ende 122 am Deckel 17 anliegt. Damit dient der Deckel 17 als großflächige Kühlung für den Leistungstransistor 131.

Wie auch in Figur 7 zu erkennen, und schon erläutert, besitzt die Platine 62 mehrere Anschlußstifte, die in das Steckergehäuse 70 hineinragen. Die Kontakstifte 111, 117, 118 des Kontaktblechs 22, die in den Aufnahmebereich 60 hineinragen, werden ebenfalls mit entsprechender Leiterbahnen auf der Platine 62 verbunden. Eine dieser Leiterbahnen verbindet den Kontakstift 118 an der Hauptleiterbahn 101 mit dem Masseanschlußstift im Steckergehäuses 70. Damit wird nicht nur eine Kontaktfeder 103 an Masse gelegt, sondern auch die Bürste, die die Kontaktfahne 105 kontaktiert. Außerdem wird über das Kühlblech und das abgebogene Ende 122 der Deckel auf Masse gelegt. Weiterhin wird bei der Ausgestaltung der Bürstenhaltebleche dafür gesorgt, daß der an Masse liegende Bereich Kontakt erhält zum Gehäuse des Elektromotors, der an das Gehäuse 3 angeflanscht wird. Damit sind alle metallischen Teile, soweit sie nicht der Spannungsführung dienen, an Masse gelegt. Somit kann der Elektromotor leicht entstört werden.

Über den zweiten Kontaktstift 117 wird die zweite Kontaktfeder 116 mit Strom versorgt, über den ersten Kontaktstift 111 wird über die dritte Leiterbahn 109, die über den Kondensator an Masse liegt, die zweite Bürste, die die Kontakfahne 107 kontaktiert, über die Drossel mit Spannung versorgt.

Bei diesem Konzept wird die gesamte Stromversorgung des Elektromotors, des Schalters, der durch die Kontakfedern 103, 116 sowie die Leiterbahnen auf der Unterseite des Schneckenrades gebildet wird, sowie die Elektronikeinheit über Kontaktbleche mit Spannung versorgt, die über einen einzigen Stecker zugeführt wird. Eine zusätzliche Verdrahtung außerhalb des Gehäuses ist nicht notwendig.

Zur Befestigung des Kontaktbleches am Boden des Gehäuses wird folgender Vorschlag gemacht (siehe dazu Figur 10). Üblicherweise ragen aus den Boden des Gehäusezapfen 140 vor, die mit entsprechenden Löchern im Blech korrespondieren. Soweit das Blech eingesetzt worden ist, ragt der Zapfen über die Oberfläche des Blechs hinaus, so daß er nun mit einem Heißstempel schmelzend niedergedrückt werden kann, wobei ein Pilz entsteht, der das Blech sicher hält.

Da, wie schon erläutert, der Kunststoff mit Fasern durchsetzt ist, kann diese Methode nicht ohne weiteres angewandt werden, da die Fasern selbst nicht an der Verformung teilnehmen.

Daher wird das Loch 141 im Blech kegelförmig ausgebildet, so daß an der einen Seite des Blechs eine relativ scharfe Kante 142 entsteht und auf der anderen Seite eine weite Öffnung. Der Durchmesser der oberen Seite der Öffnung, also dort, wo die scharfe Kante ausgebildet ist, ist etwas kleiner als der Durchmesser des Zapfens.

Wird nun das Blech auf die Zapfen 140 gedrückt, ragen diese durch Löcher hindurch, wobei die scharfe Kante 142 sich wie ein Widerhaken in der Mantelfläche des Zapfens 140 einrastet, so daß das Blech 22 nicht wieder entfernt werden kann. Damit eine dauerhafte Verbindung des Blechs 22 mit dem Gehäuse 3 entstanden.

Um die Ausrichtung des Blechs vor dem Einsetzen zu erleichtern, sind die oberen Enden 143 der Zapfen konisch zulaufend ausgebildet.

Eine weitere Detaillösung ist in Figur 1 zu erkennen. Die Welle 4 des Motors läuft in einen Endzapfen 150 aus, der an ein flaches Anlagestück 151 aus Metall angelegt ist. Dieses Anlagestück 151 ist in eine entsprechende Nut im Grundkörper 20 eingeschoben.

Da die Welle durch eine entsprechende Vorrichtung 152 auf Vorspannung gehalten wird, entsteht zwischen dem Endzapfen 150 und der Anlagescheibe 151 Reibungswärme. Da die Nut nach oben hin offen ist, kann die Einlagescheibe 151, die gegebenenfalls mit einer abgebogenen Lasche versehen ist, den Deckel 17 kontaktieren. Damit dient der Deckel 17 als Wärmeableitung für die entstehende Reibungswärme. Die Anlagescheibe 151 kann vorzugsweise oval ausgestaltet werden, wobei die Längsseite senkrecht in die nach oben offene Nut eingeführt wird.

Um eine sichere Befestigung des Zapfens 26 im Gehäuseboden zu erreichen, wird der Zapfen 26 zunächst mit ein oder mehreren umlaufenden Nuten versehen. Außerdem wird der Zapfen beim Spritzgießen des Gehäuses mit umspritzt. Auf diese Weise wird der Zapfen sicher im Gehäuseboden gehalten.

Wie in Figur 2 dargestellt, kann der Zapfen symmetrisch zur Nut an den einem Ende mit einer weiteren Nut am anderen Ende versehen werden, so daß bei der Beschickung der Spritzgießmaschine nicht auf eine Orientierung des Zapfens geachtet werden braucht.

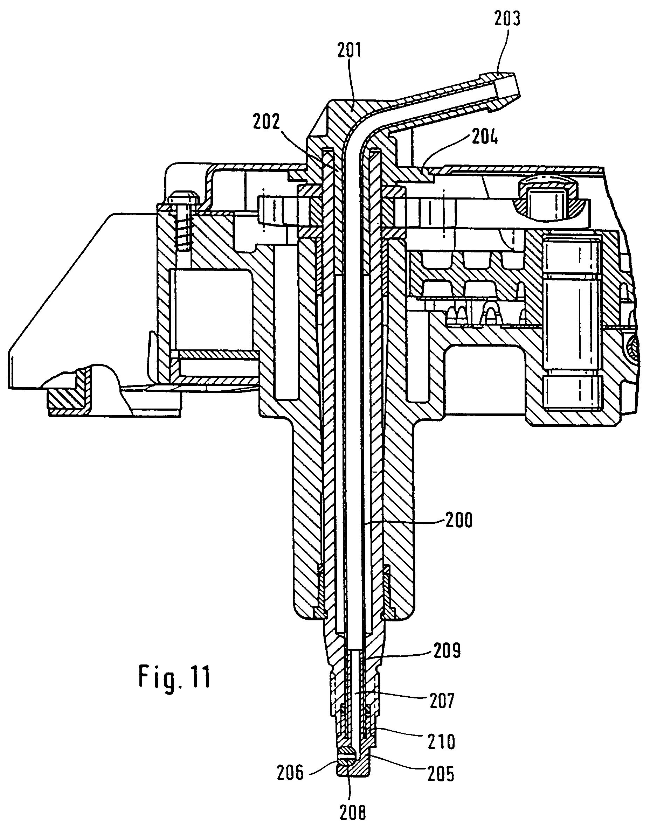

Da das bisher beschriebene Getriebe auch für eine Scheibenwischwaschanlage eingesetzt werden soll, ist eine Wasserzuführung durch die Abtriebswelle 11 vorgesehen. Dies ist in der Figur 11 näher dargestellt. Dazu ist die Abtriebswelle 11 hohl ausgebildet. Die Zuleitung besteht im wesentlichen aus einem Messingröhrchen 200, das an einem Ende abgebogen ist. Dieser abgebogene Bereich wird von einem Halteteil 201 aus Kunststoff umgeben, der um das Röhrchen herumgespritzt wird. Das Halteteil 201 weist zunächst einen Führungsteil 202 auf, der in die Hohlwelle eingeschoben wird, und das Röhrchen 200 zentriert. Das andere Ende ist zu einer Tülle 203 ausgebildet, auf der ein Schlauch aufgeschoben werden kann. Der Grundkörper 204 ist mit Hinterschneidungen versehen, mit denen dieser in eine Öffnung in Deckel 17 bajonettartig eingesetzt werden kann. Das andere Ende des Röhrchens 200 ist mit einem Abschlußteil 205 versehen, das gleichzeitig als Träger für eine Metalldüse 206 dient. Dazu weist das Abschlußteil 205 eine Ausnehmung auf, in der die Düse 206, deren Außenkontur kugelförmig ist, eingedrückt werden kann. Die Düse 206 kann nun relativ zum Abschlußteil 205 ausgerichtet werden, so daß das Waschwasser in einen definierten Bereich auf der Scheibe auftrifft. Das Abschlußteil selbst ist mit einen zentralen Sackloch 207 versehen, der im Aufnahmebereich der Düse endet und in die die Düsenbohrung 208 einmündet.

Das Problem besteht nun darin, das Abschlußteil 205 so sicher am Röhrchen 200 zu befestigen, das bei einer Verstellung der Düse 206, die Position des Abschlußteils selbst nicht geändert wird.

Dazu sieht das Abschlußteil 205 einen Führungszapfen 209 auf, der in das Metallröhrchen 200 eingesteckt werden kann, wobei der Außendurchmesser des Zapfens 209 in etwa dem Innendurchmesser des Röhrchens entspricht. Die Passung darf allerdings nicht zu eng sein, damit der röhrenförmige Zapfen 209 ohne auszuknicken in das Röhrchen eingeschoben werden kann.

Um eine Verdrehsicherung des Abschluß 205 zum Röhrchen zu erhalten, wird zusätzlich ein ringförmiger Ansatz 210 vorgesehen, der koaxial zum röhrenförmigen Zapfen 209 angeordnet ist, so daß zwischen dem Ansatz 210 und den röhrenförmigen Zapfen 209 eine Ringnut entsteht, deren Breite der Dicke der Rohrwand entspricht. Wird nun das Röhrchenende an seiner Außenseite ein wenig aufgerauht, angefräst oder in sonstiger Weise die Rauhigkeit der Oberfläche erhöht, so sitzt das Röhrchen mit ausreichender Klemmkraft in der Ringnut zwischen dem Ansatz 210 und dem Zapfen 209.

Die axiale Länge des Ansatzes 210 wird so bestimmt, daß eine ausreichende Klemmkraft erzeugt werden kann, die Länge des röhrenförmigen Zapfens 209 wird so bestimmt, daß eine ausreichende Dichtigkeit des Trägers 205 gegenüber dem Röhrchen bewirkt wird.

## Patentansprüche

1. Gehäuse für ein Getriebe bestehend aus einem Grundkörper (20) mit mindestens einer Vertiefung (28) zur Aufnahme von Getriebeelementen, wobei die Vertiefung (28) durch einen metallischen Deckel (17) verschlossen wird, und eine Führungshülse (40) am Grundkörper (20) ausgebildet ist, die sich nach außen senkrecht zum Boden (27) des Grundkörpers (20) erstreckt, dadurch **gekennzeichnet**, daß der Grundkörper (20) aus glasfaserverstärktem Kunststoff besteht, und daß im Boden (27) der Vertiefung (28) eine Zapfenaufnahme angeordnet ist, die sich senkrecht nach außen aus dem Boden (27) erhebt, und mit Versteifungsstreben (56,57), die zwischen der Zapfenaufnahme und der Führungshülse (40) verlaufen.

2. Gehäuse nach Anspruch 1, dadurch **gekennzeichnet**, daß die Führungshülse (40) in einen Dom (41) angeordnet ist, wobei zwischen den Innenwänden des Doms (41) und den Außenwänden der Führungshülse (40) senkrecht verlaufende Versteifungsstreben (45) verlaufen.

## Claims

1. A housing for a gearing comprising a base element (20) with at least one recess (28) for accommodating gearing elements, the recess (28) being closed by a metallic cover (17), and a guide sleeve (40) being constructed on the base element (20), which guide sleeve extends outwards perpendicular to the base (27) of the base element (20), characterised in that the base element (20) is made of glass fibre-reinforced plastics material and in that a journal socket is arranged in the base (27) of the recess (28) and projects perpendicularly outwards from the base (27), and with reinforcing struts (56, 57), which extend between the journal socket and the guide sleeve (40).

2. A housing according to claim 1, characterised in that the guide sleeve (40) is arranged in a dome (41), perpendicularly extending reinforcing struts (45) extending between the inner walls of the dome (41) and the outer walls of the guide sleeve (40).

## Revendications

1. Boîtier, pour mécanisme de transmission, constitué d'un corps de base (20) comportant au moins une partie en retrait (28) servant à recevoir des éléments du mécanisme, la partie en retrait (28) étant fermée au moyen d'un couvercle (17) métallique, tandis que, sur le corps de base (20), il est réalisé un manchon de guidage (40) qui s'étend vers l'extérieur perpendiculairement au fond (27) du corps de base (20), caractérisé en ce que le corps de base (20) est en matière plastique renforcée de fibre de verre, en ce que dans le fond (27) de la partie en retrait (28), est ménagé un logement d'axe, qui s'élève perpendiculairement vers l'extérieur à partir du fond (27), et en ce qu'il est prévu des voiles de renfort (56, 57) qui s'étendent entre le logement d'axe et le manchon de guidage (40).

2. Boîtier suivant la revendication 1, caractérisé en ce que le manchon de guidage (40) est disposé dans un dôme (41), des voiles de renfort (45) s'étendant perpendiculairement entre la paroi intérieure du dôme (41) et la paroi extérieure du manchon de guidage (40).
